# NEUE EUROPÄISCHE PATENTSCHRIFT

(11) **EP 0 248 199 B2**
(45) Veröffentlichungstag und Bekanntmachung des Hinweises auf die Entscheidung über den Einspruch: **20.07.1994**
(45) Hinweis auf die Patenterteilung: 22.11.1990
(21) Anmeldenummer: 87106060.4
(22) Anmeldetag: 25.04.1987
(51) Int. Cl.: B60R 13/02, B32B 5/18, B32B 5/20

(54) **Mehrschichtiges Verkleidungselement**
Multilayer lining element
Elément de recouvrement multicouche

(30) Priorität: 05.06.1986 DE 3618986; 20.06.1986 DE 3620726
(43) Veröffentlichungstag der Anmeldung: 09.12.1987
(73) Patentinhaber: J. H. Benecke AG, D-30419 Hannover (DE)
(72) Erfinder: Wagner, Werner, Dr., D-3025 Bad Nenndorf (DE); Blume, Wilfried, D-3000 Hannover 21 (DE)
(74) Vertreter: Patentanwälte Thömen & Körner

(56) Entgegenhaltungen:
- EP-A- 0 171 655
- DE-A- 2 434 175
- DE-A- 2 608 392
- DE-A- 2 739 642
- DE-A- 2 831 640
- DE-A- 2 915 474
- DE-A- 3 228 394
- DE-A- 3 435 070
- DE-U- 7 706 813
- GB-A- 993 042
- GB-A- 1 470 066

## Beschreibung

Die Erfindung betrifft ein mehrschichtiges Verkleidungselement mit einer verformbaren mittleren Trägerschicht aus vorzugsweise ausgeschäumtem Kunststoff, sowie mit beidseitig der Trägerschicht angeordneten weiteren ebenfalls verformbaren Schichten, und mit einer Dekorschicht, Insbesondere einen Autohimmel für ein Kraftfahrzeug.

Verkleidungselemente dieser Gattung finden in der Praxis eine vielfache Verwendung, und als ein besonderes Anwendungsgebiet gilt der Einsatz bei Kraftfahrzeugen zur Verkleidung des Autodaches im Fahrgastraum in Form eines Autohimmels.

Grundsätzlich steht bei einem Verkleidungselement naturgemäß der Gesichtspunkt im Vordergrund, irgendwelche Teile optisch abzudecken und zu verschönern, während demgegenüber der Aspekt einer besonderen mechanischen Beanspruchung in den Hintergrund tritt.

Deshalb wird beispielsweise ein Autohimmel in einem Kraftfahrzeug nach anderen Kriterien hergestellt und aufgebaut, als etwa ein einer gewissen Belastung und Beanspruchung ausgesetztes Armaturenbrett in dem Kraftfahrzeug.

Die bekannten Autohimmel sind sandwichartig aufgebaut und bestehen aus einer mittleren Trägerschicht aus ausgeschäumtem Kunststoff, und auf beiden Seiten der Trägerschicht sind weitere verformbare Schichten angeordnet. Zunächst befindet sich auf jeder Seite der üblicherweise aus Polyuretan bestehenden Trägerschicht eine beidseitig aktive Klebefolie (PE), mit welcher eine weitere Schicht aus Glasvlies an der Trägerschicht befestigt wird.

Auf der oberen Seite des bekannten Autohimmels befindet sich im Anschluß an die Glasvlies-Schicht eine weitere beidseitig aktive Kunststoffklebefolie, um das Verkleidungselement am Autodach zu befestigen.

Auf der unteren dem Fahrgastraum zugewandten Seite des Autohimmels schließt sich an die dortige Glasvlies-Schicht ebenfalls eine beidseitige Klebefolie an, auf welche die Sichtbare Dekorschicht des Autohimmels geklebt ist.

Bei diesem bekannten Autohimmel steht im Grunde genommen die Verwendung der Glasvlies-Schicht im Vordergrund, während die mittlere Trägerschicht aus Polyuretan praktisch nur die Funktion als Abstandshalter übernimmt. Es ist ohne weiteres ersichtlich, daß der Aufbau des bekannten Autohimmels wegen der Vielzahl der benötigten Schichten sehr aufwendig und daher in der Herstellung auch sehr schwierig ist.

Dies ist auf die an den Autohimmel zu stellenden Forderungen zurückzuführen. So ist es beispielsweise unbedingt notwendig, eine bestimmte Temperaturbeständigkeit bzw. Wärmefestigkeit vorauszusetzen. Zur Anpassung an die jeweilige Form des bestimmungsgemäßen Autodaches wird das zunächst in einer Ebene vorliegende Verkleidungselement nämlich unter einer Temperatur von etwa 180°C umgeformt.

Eine weitere Temperaturbelastung ergibt sich, wenn das mit dem Autohimmel versehene Kraftfahrzeug in einer Lackierkammer unter relativ hohen Temperaturen lackiert wird.

Diese Anforderungen haben in der Praxis zu dem beschriebenen aufwendigen mehrschichtigen Aufbau des Autohimmels geführt.

Um allen diesen Anforderungen gerecht zu werden, hat man sich bisher stets für die Verwendung von Glasvlies entschieden, welches auch eine gewisse mechanische Stabilität besitzt. Wegen der unerläßlichen Verformbarkeit beim Umformen auf die gewünschte Form des Autohimmels muß das Glasvlies eine gewisse Struktur und damit eine rauhe Oberfläche besitzen, denn andernfalls wäre die Glasvlies-Schicht nicht verformbar.

Die rauhe Oberfläche der Glasvlies-Schicht ist andererseits aber mit verantwortlich für die aufwendige Gestaltung des Autohimmels. So ist die Kunststoffolie auf den beiden Oberflächen der Trägerschicht erforderlich, um zu verhindern, daß Polyuretan beim Ausschäumen in das Glasvlies schäumt. Ferner ist es notwendig auf der Dekorseite des Autohimmels zwischen dem Glasvlies und dem Dekor noch eine glättende Schicht vorzusehen, wodurch sich der Aufwand bei der gesamten Herstellung noch zusätzlich erhöht.

Neben den geschilderten Nachteilen muß auch noch erwähnt werden, daß die Gefahr besteht, daß das Glasvlies während des unter Temperatur erfolgenden Verformens, wenn dem mehrschichtigen Autohimmel die gewünschte endgültige Formgestaltung gegeben wird, zerreißen kann, wenn größere Krümmungen geformt werden müssen. Zwar ist ein solches Zerreißen unter Umständen optisch nicht einmal sichtbar, allerdings leidet darunter insgesamt die mechanische Stabiliät, sodaß bei einemAutohimmel mit einer starken Umformung ein erhöhter Ausschuß zu erwarten ist.

Durch die Druckschrift DE-A-2 739 642 ist bereits ein mehrschichtiges Verkleidungselement bekannt, das aus einer mittleren Trägerschicht aus geschäumtem Kunststoff sowie aus an der Trägerschicht durch nachträgliches Aufschweißen oder Ankleben befestigter Filme besteht. Die so gebildete Schichtverbundplatte ist thermisch in die gewünschte Form des Vekleidungselementes umformbar. Durch das vorbereitende Aufkleben oder Aufschweißen ist der Herstellungsaufwand noch. Auch bietet eine fertige Schaumstoffoberfläche nicht die Gewähr, daß die Verbindung mit den Filmen ohne Haftprobleme zustande kommt und auch nach starken Umformungen noch erhalten bleibt.

Ein weiteres mehrschichtiges Verkleidungselement ist aus der GB-A-993 042 bekannt. Dieses Verkleidungselement besteht ebenfalls aus einer geschäumten Trägerschicht und beidseitigen Auflagen. Die Auflagen sind jedoch bereits vor ihrer Verbindung mit der Trägerschicht in die endgültige Form gebracht. Nachdem der Spattzwischen den Auflagen aus geschäumt wurde, wird das Verkleidungselement nicht mehr umgeformt. Eine thermische Umformung wäre technisch auch nicht möglich, da die zum Erweichen der Trägerschicht über die Auflagen zuzuführende Wärme zu einer Zerstörung der Auflagen führen würde.

Außerdem ist aus dem Dokument DE-U-7 706 813 eine Mehrschichtplatte mit einem Schaumkern und Auflagen aus Kunststoff oder Metall bekannt. Die Schichten sind durch ein FlammkaschierVerfahren in Verbindung gebracht, wobei zusätzlich ein Haftvermitter eingestet werden kann. Die Auflagen sind Tiefziehbar.

Weiterhin beschreibtdie DE-A-3 435 070 ein Verfahren zur Herstellung von geschäumten Polyurethanen, die mit einem anderen Werkstoffverbunden werden. Hierbei ist jedoch vor das Hinterschäumen einer einzigen Folie beschrieben. Eine nachträgliche Umformung zu einem Verkleidungselement ist nicht erwähnt.

Durch die Druckschrift GB-A-1 470 066 ist ein mehrschichtiges Element in Form einer laminierten Platte mit einem Kern aus steifem, unbiegsamen schaumförmigen isocyanat bekannt, welches zwischen zwei Deckschichten angeordnet ist, wobei innerhalb einer schaumförmigen Kernschicht ein Bindemittel eingebettet ist, welches für isocyanatschaumbildende Bestandteile durchlässig ist.

Die bekannte laminierte feste Platte ist zur Verwendung beim Bau vorgesehen, beispielsweise als Geräusch- oder Wärmedämmung, wofür eine Dekorschicht nicht erforderlich ist. Vielmehr steht naturgemäß entsprechend der Verwendung als Bauplatte die mechanische Stabilität im Vordergrund. Insbesondere umfaßt die bekannte Bauplatte keine verformbare mittlere Trägerschicht, und auch die beidseitig der Trägerschicht angeordneten Schichten sind ebenfalls nicht verformbar. Daneben bestehen die beidseitig der Trägerschicht angeordneten Schichten nicht aus einem Thermoplast.

Durch die weiteren Druckschriften DE-A-3 228 394, DE-A-2 831 640, DE-A-2 608 392 und DE-A-2 915 474 ist es ferner bekannt, bei Konstruktionselementen als Verkleidung eine Dekorschicht vorzusehen. Dabei betrifft die DE-A-3 228 394 ein Trägermaterial als Verkleidung, welches mit einer Dekorschicht versehen ist. Diese Druckschrift befaßt sich also mit einem dekorierten Trägermaterial. Ein mehrschichtiger Aufbau mit einer mittleren Trägerschicht, wobei auf den beiden Seiten der Trägerschicht eine Auflage aus einem Thermoplast befestigt ist, wird in dieser Druckschrift nicht beschrieben.

Bei dem durch die DE-A-2 831 640 bekannten mehrschichtigen Verbundwerkstoff, insbesondere für die Auskleidung eines Personenkraftwagens, ist vorgesehen, einen Vliesstoff zwischen 2 plattenförmigen Schichten anzuordnen. Für die eingebettete Trägerschicht ist dabei PUR bewußt ausgeschlossen.

Die Druckschrift DE-A-2 608 392 betrifft eine Deckenauskleidung für Kraftfahrzeuge, welche durch einen selbsttragenden Flächenteil gekennzeichnet ist, der aus einer ersten, eine vorbestimmte Kontur aufweisenden Lage von erheblichem Biegewiderstand, einer zweiten Lage aus schallabsorbierendem Material und schließlich aus einer dekorativen Oberflächenlage besteht. Dieser Schichtaufbau weicht völlig von dem mehrschichtigen Verkleidungselement nach der Erfindung ab.

Schließlich ist in der DE-A-2 915 474 ein Verbundschichtgebilde, insbesondere in Form eines Fertighimmels für Automobile, beschrieben, dessen Gemeinsamkeit mit der Erfindung sich darauf beschränkt, daß eine Dekorschicht verwendet wird. Eine verformbare mittlere Trägerschicht sowie auf beiden Seiten der Trägerschicht vorgesehene Auflagen aus einem Thermoplast sind nicht erwähnt.

Der Erfindung liegt die Aufgabe zugrunde, ein mehrschichtiges verformbares Verkleidungselement zu schaffen, welches einfach im Aufbau und in der Herstellung ist, und welches gleichwohl auch starke Umformungen ohne die Gefahr des Verlustes an mechanischer Stabilität zuläßt.

Die Lösung dieser Aufgabe erfolgt bei dem im Oberbegriff desd Patentanspruchs 1 genannten mehrschichtigen Verkleidungselement durch die Merkmale des kennzeichnenden Teils des Patentanspruchs 1.

Die Verwendung eines Thermoplast, der praktisch an die Stelle des Glasvlieses tritt, bringt den überraschenden Vorteil, daß sich die Anzahl der Gesamtschichten des Verkleidungselements erheblich verringern läßt, wodurch die Herstellung wesentlich vereinfacht wird. Besonders geeignet ist die Verwendung von Acrylnitril-Butadien-Styrol, welches in gewünschter Weise unter Temperatur und Kraft umformbar ist. Die Verwendung einer Trägerschicht aus polyuretan wird bei dem neuen Verkleidungselement beibehalten, wobei die Trägerschicht auch hier praktisch die Funktion eines Abstandshalters übernimmt.

Anstelle von insgesamt mindestens 8 Schichten bei den bekannten Verkleidungselementen werden bei dem neuen Verkleidungselement lediglich nur noch 5 Schichten benötigt, einschließlich der Dekorschicht. Die Trägerschicht wird nämlich direkt an die beiden Auflagen aus Acryl-Butadien-Styrol angeschäumt, wodurch die bei den bekannten Verkleidungselementen benötigten Kunststoffolien zur "Glättung" der rauhen Oberfläche des Glasvlieses entfallen können. Die Thermoplastschicht selbst läßt sich nämlich mit glatter Oberfläche herstellen.

Nach einer zweckmäßigen und vorteilhaften Ausgestaltung der Erfindung besteht die auf beiden Seiten der Trägerschicht befestigte Auflage aus einer Mischung (Blend) aus Polycarbonat mit ABS (PC/ABS).

Als vorteilhaft hat es sich auch erwiesen, für die erwähnte Auflage eine Mischung aus Polycarbonat mit Polybutylenterephthalat (PC/PBTB) zu verwenden.

In zweckmäßiger Ausgestaltung kann die Auflage auch aus einer Mischung aus Acrylnitril-Styrol-Acrylsäureester (ASA) bestehen, und schließlich ist auch für die Auflage die Verwendung einer Mischung von PC/ABS PC/PBTB, ASA mit PVC von besonderem Vorteil.

Weitere zweckmäßige Ausgestaltungen und Weiterbildungen der Erfindung sind in den übrigen Unteransprüchen angegeben und der Zeichnung zu entnehmen.

Nachfolgend wird die Erfindung anhand des in der Zeichnung dargestellten Ausführungsbeispiels näher erläutert.

Es zeigt:

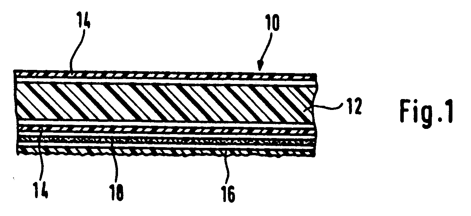

Fig. 1 eine schematische Querschnittsansicht eines Verkleidungselements gemäß der Erfindung.

In Fig. 1 ist ein Verkleidungselement in Form eines Autohimmels 10 in tei Iweiser Darstellung gezeigt. Zur besseren Verdeulichung sind die einzelnen schematisch angedeuteten Schichten im Abstand voneinander gezeichnet, während sie tatsächlich in unmittelbarer Berührung miteinander liegen.

Als Trägerschicht 12 dient Polyuretan (PU; ein ausgeschäumter Kunststoff). Zu beiden Seiten der Trägerschicht 12 befindet sich jeweils eine Auflage 14 als weitere Schicht. Die Auflage 14 besteht aus einer ABS-Folie (Acrylnitril-Butadien-Styrol). Die Trägerschicht 12 aus Polyuretan ist direkt an die Auflage 14 angeschäumt und dadurch ohne Haftungsprobleme mit der Trägerschicht 12 verbunden. Das soweit beschriebene Verkleidungselement kann problemlos unter Kraft- und Temperatureinwirkung entsprechend einer gewünschten Form eines Autodaches umgeformt werden, ohne daß dabei auch bei starken Umformungen die Gefahr eines Zerreißens der Auflagen 14 besteht.

Auf der unteren dem Fahrgastraum eines Kraftfahrzeuges zugewandten Seite des Autohimmels 10 ist eine Dekorschicht 16 mittels einer Klebefolie 18 aufgeklebt. Das Aufkleben der Dekorschicht 16 kann noch vor dem Umformen erfolgen, ebenso ist es aber auch möglich; die Dekorschicht 16 nach dem Umformen aufzukleben.

## Patentansprüche

1. Mehrschichtiges Verkleidungselement mit einer verformbaren mittleren Trägerschicht aus vorzugsweise ausgeschäumtem Kunststoff, sowie mit beidseitig der Trägerschicht angeordneten weiteren ebenfalls verformbaren Schichten, und mit einer Dekorschicht, insbesondere Autohimmel für ein Kraftfahrzeug, wobei auf beiden Seiten der Trägerschicht (12) eine Auflage (14) aus einem Thermoplast befestigt ist, und wobei auf der der Trägerschicht (12) abgewandten Seite einer Auflage (14) die Dekorschicht (16) aufgeklebt (18) ist, dadurch gekennzeichnet, daß die Trägerschicht (12) aus Polyuretan (PU) besteht und direktan die beiden Auflagen (14) angeschäumt ist.

2. Verkleidungselement nach Anspruch 1, dadurch gekennzeichnet, daß die Auflage (14) aus Acrylnitril-Butadien-Styrol (ABS) besteht.

3. Verkleidungselement nach Anspruch 1, dadurch gekennzeichnet, daß die Auflage (14) aus einer Mischung (Blend) aus Polycarbonat mit ABS besteht (PC/ABS).

4. Verkleidungselement nach Anspruch 1, dadurch gekennzeichnet, daß die Auflage (14) aus einer Mischung aus Polycarbonat mit Polybutylenterephthalat besteht (PC/PBTP).

5. Verkleidungselement nach Anspruch 1, dadurch gekennzeichnet, daß die Auflage (14) aus einer Mischung aus Acrylnitril-Styrol-Acrylsäuerester (ASA) besteht.

6. Verkleidungselement nach Anspruch 3-5, dadurch gekennzeichnet, daß die Auflage (14) aus einer Mischung von PC/ABS, PC/PBTP, ASA mit PVC besteht.

## Claims

1. Multilayer covering member with a deformable, central carrier layer of preferably completely foamed plastic, as well as further, also deformable layers located on either side of the carrier layer, as well as with a decorative layer, particularly for motor vehicle roof linings, a thermoplastic coating (14) being fixed on either side of the carrier layer (12) and the decorative layer (16) being bonded (18) on the side of a coating (14) remote from the carrier layer (12), characterized in that the carrier layer (12) is of polyurethane (PU) and is directly foamed onto the two coatings (14).

2. Covering member according to claim 1, characterized in that the coating (14) is made from acrylonitrile-butadiene-styrene (ABS).

3. Covering member according to calim 1, characterized in that the coating (14) is formed from a blend of polycarbonate with ABS (PC/ABS).

4. Covering member according to claim 1, characterized in that the coating (14) is of a blend of polycarbonate and polybutylene terephthalate (PC/PBTP).

5. Covering member according to claim 1, characterized in that the coating (14) is of a blend of acrylonitrile-styrene-acrylate (ASA).

6. Covering member according to claims 3 to 5, characterized in that the coating (14) is of a blend of PC/ABS, PC/PBTP, ASAand PVC.

## Revendications

1. Elément de recouvrement multicouche avec couche porteuse médiane déformable en plastique de préférence en mousse, ainsi qu'avec des deux côtés de la couche porteuse d'autres couches éventuellement, et avec une couche décor, en particulier un plafond d'auto pour un véhicule automobile, un parement (14) en thermoplastique etant fixé des deux côtés de la couche porteuse (12), et la couche décor (16) etant collée (18) sur le côté d'un parement appliqué à la couche porteuse (12), caractérisé en ce que la couche porteuse (12) est en polyuréthanne (PU) et réalisée en mousse directement sur les deux parements (14).

2. Elément de revêtement selon la revendication 1, caractérisé en ce que le parement (14) est en sty- rène/butadiène/acrylonitrile (ABS).

3. Elément de revêtement selon la revendication 1, caractérisé en ce que le parement (14) est en un mélange (Blend) de polycarbonate et d'ABS (PC/ABS).

4. Elément de revêtement selon la revendication 1, caractérisé en ce que le parement (14) est un mélange de polycarbonate et de poly (téréphtalate de butylène) (PC/PBTP).

5. Elément de revêtement selon la revendication 1, caractérisé en ce que le parement (14) est en un mélange de poly (acrylonitrile/styrène/acrylate d'éthyle) (ASA).

6. Elément de revêtement selon la revendications 3 à 5, caractérisé en ce que le parement est en un mélange de PC/ABS, PC/PBTP, ASA et de PVC.
